# EUROPEAN PATENT SPECIFICATION

(11) **EP 2 437 642 B1**
(45) Date of publication and mention of the grant of the patent: **02.04.2014**
(21) Application number: 10731574.9
(22) Date of filing: 04.06.2010
(51) Int. Cl.: A47J 36/32, A47J 37/12

(54) **APPARATUS FOR COOKING AND METHOD OF HELPING A USER TO COOK**
GARVORRICHTUNG UND KOCHHILFEVERFAHREN FÜR EINEN BENUTZER
APPAREIL POUR CUISINER ET PROCÉDÉ POUR AIDER UN UTILISATEUR À CUISINER

(30) Priority: 05.06.2009 CN 200910139299
(43) Date of publication of application: 11.04.2012
(73) Proprietor: Koninklijke Philips N.V., 5656 AE Eindhoven (NL)
(72) Inventor: YUAN, Chun, Pong, Shanghai 200233 (CN); WOUTERS, Mirjam, Suzanne, 1000 AW Amsterdam (NL); NEERVOORT, Paul, 1000 AW Amsterdam (NL); KARNIK, Mayur, Prabhakar, Pune 411 001 (IN); JEE, Eun-hye, Hong Kong 1000 (CN)
(74) Representative: Damen, Daniel Martijn
(86) International application number: PCT/IB2010/052489
(87) International publication number: WO 2010/140135

(56) References cited:
- EP-A1- 1 498 062
- EP-A2- 2 048 566
- CA-A1- 2 558 149

## Description

### FIELD OF THE INVENTION

The invention relates to an apparatus for cooking, the invention also relates to a method of helping a user to cook.

### BACKGROUND OF THE INVENTION

Increasingly, people with fast life style become eager for smart cookers to simplify their cooking work. However, cookers on current market only carry several simple ways of cooking functions (steam, stew, double boiled etc.). When using such cookers, people still need to pay much attention to the process of cooking, such as when to add materials, when to turn down/off the fire power, etc.

### SUMMARY OF THE INVENTION

To eliminate the above disadvantages, the present invention provides a technical solution for cooking by prompting the user, step by step, to do corresponding preparation at right time.

According to one embodiment of the present invention, there is provided an apparatus for cooking, comprising:
a presenter, configured to present information of a first preparation for a first operation;
a detector, configured to detect if said first preparation has been done;
a performer, configured to perform said first operation if said first preparation has been done.
Said presenter is further configured to present information of a second preparation for a second operation;
said detector is further configured to detect if said second preparation has been done;
said performer is further configured to perform said second operation if said second preparation has been done.

Alternatively, the presenter comprises a screen and/or a speaker. The screen is configured to display text and/or videos and/or pictures for presenting information of said first or second preparation. The speaker is configured to play sounds for presenting information of said first or second preparation.

According to another embodiment of the present invention, there is provided a cooker comprising the apparatus described above. Advantageously, the cooker is a rice cooker.

According to another embodiment of the present invention, there is provided a method of helping a user to cook, comprising:
- presenting information of a first preparation for a first operation;
- detecting if said first preparation has been done;
- performing said first operation if said first preparation has been done.

Advantageously, the method of helping the user to cook further comprises the following steps:
- presenting information of a second preparation for a second operation;
- detecting if said second preparation has been done;
- performing said second operation if said second preparation has been done.

By applying the apparatus and method of the present invention, the process of cooking is greatly simplified to users. Users can relax themselves from monitoring the cooking process. All they have to do is only doing the corresponding preparations as prompted or guided. This means various raw materials can be added to the apparatus for cooking at the right time and delicious dishes can be made with much less care of users.

Further more, as the prompt or guidance can be presented in text, audio or video format, people who don't know the recipe in advance can also make high quality dishes.

It is to be noted that Canadian patent application document CA 2 558 149 A1 discloses a cooking apparatus with a temperature probe and a timer which can be configured by the user to heat comestibles to a first user set temperature for a first period of time and directly following this first period to heat the comestibles to a second user set temperature for a second period of time. CA 2 558 149 A1 does not prompt the user nor is configured to allow the user to perform any preparation action between the first period and the second period.

### DESCRIPTION OF THE DRAWINGS

The above and other objects and features of the present invention will become more apparent from the following detailed description considered in connection with the accompanying drawings, in which:
FIG.1 is a schematic block diagram of an apparatus 100 according to one embodiment of the present invention;
FIG.2 is a flowchart showing the function of the apparatus 100 in FIG.1;

The same reference numerals are used to denote similar parts throughout the figures.

### DETAILED DESCRIPTION

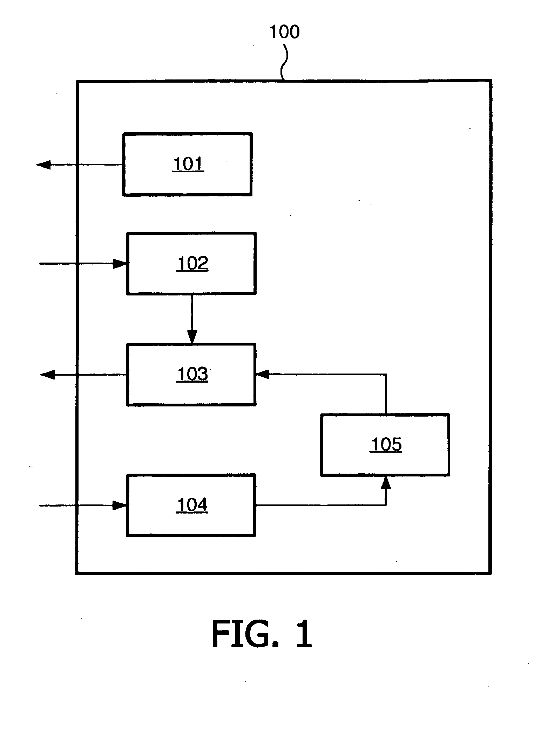

Fig.1 shows a schematic block diagram of apparatus 100 for cooking according to one embodiment of the present invention. In Fig.1, the apparatus 100 comprises a provider 101, a receiver 102, a presenter 103, a detector 104, a performer 105.

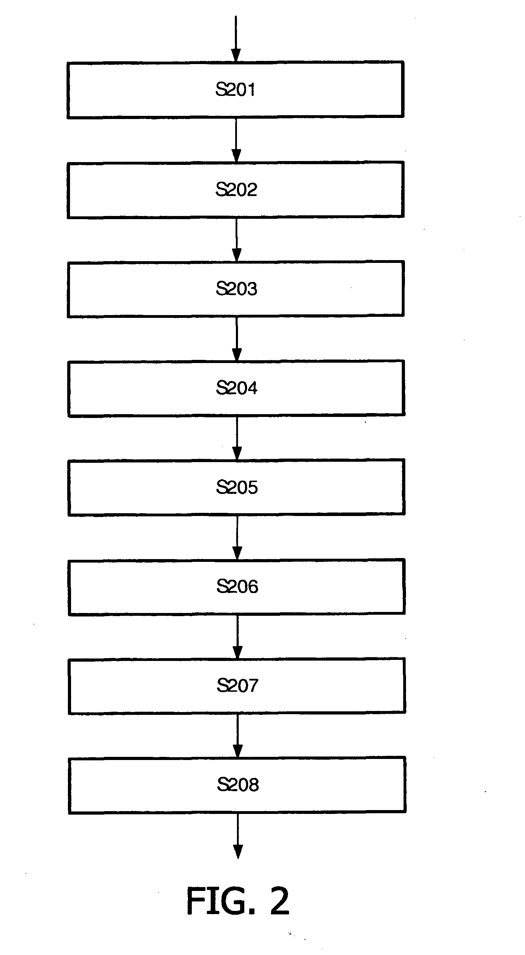

Fig.2 shows a schematic flowchart of a cooking process of the apparatus 100 in Fig.1, which will be described in detail in the following text in conjunction with Fig.l.

Firstly, in step S201, the provider 101 provides a menu for a user to select. The menu can be provided in way of displaying text and/or pictures and/or videos on a screen, and/or playing sounds via a speaker. The provider 101 can also be a set of buttons on the apparatus 100 as what are used on conventional rice cooker. The menu can include a lot of dishes, such as Tom Yum soup, vegetable soup, meat ball soup, fish ball soup, rice, and congee etc.

Secondly, in step S202, the receiver 102 receives a selection in the menu from the user. Similarly, the user can make the selection in a way of text input, or button input, or voice input etc. Obviously, for the latter one, the receiver 102 should have a microphone and corresponding speech processing module to receive the user's voice and recognize the meaning of the user's voice.

Alternatively, after the receiver 102 receives the selection from the user, the presenter 103 can firstly presents a preparation list of material or a prescribed recipe associated with the dish user selected before step S203. For example, if the user chooses Tom Yum soup, a preparation list of material for Tom Yum soup can be presented like: broth - 4 cups, mushroom - 5, tomato - 1, kaffir lime leaves - 3 pieces, glangal & lemon grass - 1, shrimp/meat- 1 cup, chili paste - 1 spoon, other seasoning.

Then, in step S203, the presenter 103 presents information of a first preparation for a first operation associated with a prescribed recipe for the dish user selected. It is to be understood that information of the first preparation and the first operation vary due to different dishes user selected. For example, For Tom Yum soup, information of the first preparation is "add broth, mushroom, tomato, kaffir lime leaves, galangal & lemon grass" and the first operation is heating for half hour. For vegetable soup, information of the first preparation is "add water to make broth" and the first operation is heating the water to a boil.

Then in step S204, the detector 104 detects if the first preparation has been done. There are various ways of detecting. For example, the user can give a feedback to indicate that the first preparation has been done. The detector 104 confirms that the first preparation has been done if it receives such feedback. Such feedback can be done in several ways. For example, the user can press a button (such as "Start" button or "Continue" or "OK" button) to give a feedback or speak some words like "Preparation is done" etc. For the former case, the detector 104 confirms the first preparation has been done when the pressure applied to the button is detected by the detector 104. For the latte case, similar to the receiver 102, the detector 104 should have a microphone and corresponding speech processing module to receive the user's voice and recognize the meaning of the user's voice.

Alternatively, in some situations, the user needn't give the feedback. the detector 104 can detect the pressure produced by the accessory of the apparatus 100 (for example, the inner boiler of a rice cooker) to check if the first preparation such as putting cooking material has been done. Alternatively, the detector 104 can detect if the cover has been opened and closed to determine if the first preparation has been done. Also, there are a lot of ways to detect the opening and closing of the cover, such as detecting the pressure produced by the cover, or using an ambient-light-sensor to detect if the cover has been opened, etc.

If detecting result indicates that the first preparation has been done, the performer 105 performs the first operation in step S205. For Tom Yum soup, the first operation is heating the broth for half an hour. The performer 105 can use a timer to determine if the cooking time is up. Advantageously, the cooking time of every operation can be manually adjusted by the user according to his/her personal taste. For vegetable soup, the first operation is heating the water to a boil. The performer 105 can use a thermometer or a hygrometer to determine if the water is boiling.

After the first operation has been done, the presenter 103 presents information of a second preparation for a second operation in step S206. For Tom Yum soup, the presenter 103 presents "Add shrimp/meat". For vegetable soup, the presenter 103 presents "Add vegetables". For information of every preparation, in addition to the materials are presented, the quantity of the materials can also be presented together, for example "Add shrimp/meat, 1 cup or 100g ".

In addition to present information of the second preparation, the presenter 103 can further present reminding information to remind the user that the first operation has been done. For example, the presenter 103 can use a beeper or a buzzer to make a beep, or play short music to remind the user that the first operation has been done.

In step S207, the detector 104 detects if the second preparation has been done. The way of detecting is similar as that in step S204.

If the second preparation has been done, the performer 105 performs the second operation in step S208. For example, for Tom Yum soup, the second operation is to keep heating for 6 minutes. For vegetable soup, the second operation is to keep heating to a boil again.

If there are other operations need to be performed, the presenter 103, the detector 104, the performer 105 keep doing above procedures for other operations.

For example, for Tom Yum soup, alternatively, there is a third operation of keeping warm for one hour. After the second operation of heating for 6 minutes, the presenter 104 presents information of the third preparation of "Add chili paste & other seasoning". The detector 104 then detects if the third preparation has been done by using the similar way in step S204. If the third preparation has been done, the performer 105 performs the third operation.

Alternatively, the presenter 103 can further present information of "Done" after the performer 105 performs the last operation associated with the prescribed recipe for the dish user selected. For example, the vegetable soup just has two operations, after the performer 105 performs the second operation of heating the broth to a boil, the presenter 103 presents information of "Done" to notify the user that the vegetable soup is ready. Alternatively, the presenter 103 can play music together with presentation of "Done" via a speaker.

The working process of the apparatus 100 is well elaborated by example of cooking process including two or more operations in combination with Fig. 1 and Fig. 2 in view of function in above context. It is to be understood that the units in Fig. 1 and the flow in Fig. 2 are only for illustrative purpose. The hardware implementation of the apparatus 100 can be various. For example, the provider 101 and the presenter 103 can share the same hardwares like a plurality of buttons, a screen, a speaker etc. As described above, the receiver 102 and the detector 104 can share the same hardwares, too.

It should be noted that the provider 101 and the receiver 102 are optional units. For example, an apparatus only for cooking one dish may not need the provider 101 and the receiver 102. With the same reason, steps S201 and S202 are optional steps, too.

It is also to be understood that above information of preparation and operations are only illustrative. There can be several recipes for one dish in the menu. And operations performed by the performer 105 comprise various ways of cooking, such as heating, cooling, condensing or combination of them etc. The heating can be implemented in many ways, such as stewing, steaming, barbecuing, frying and double boiling etc. The performer 105 can be a single utensil with multi cooking function or a set of several utensils.

Another thing to be understood is there can be many operations to be done by the performer 105 for one dish. Such operations can be different from each other, or can be totally same, or can be partially same. Specifically, actions performed for one operation and another operation can be different or same, the materials targeted by the action of one operation and another operation can be different or same, the time intervals of one operation and another operation can be different or same. It can be seen from the above description that for Tom Yum soup, the action performed for the first operation is same as that for the second operation but the time interval performed for the first operation is different from that of the second operation.

Similarly to the operations, there also can be many preparations to be done by the user for one dish. Such preparations can be different from each other, or can be totally same, or can be partially same. For example, one cooking process of Chinese noodle is like: 1. Add water in the pot and heat o a boil; 2. Put the noodle in the pot and then heat to a boil; 3. Add a bowl of cold water and heat to a boil; 4.Add another bowl of cold water and heat to a boil; 5. Keep warm for 3 minutes. From this recipe, it can be seen that the preparations of operation 3 and 4 are same.

Traditional cookers can comprise the apparatus 100 to provide smart cooking for the user. It is to be understood that various traditional cookers comprises electric cookers or gas cookers etc. The electric cooker can be a rice cooker or a microwave oven etc.

It should be noted that the above-described embodiments are for purpose of illustration only and not to be construed as limitation of the invention. All such modifications which do not depart from the spirit of the invention are intended to be included within the scope of the appended claims. In the claims, any reference signs placed between parentheses shall not be construed as limiting the claim. The word "comprising" does not exclude the presence of elements or steps not listed in a claim or in the description. The word "a" or "an" preceding an element does not exclude the presence of a plurality of such elements. In the apparatus claims enumerating several units, several of these units can be embodied by one and the same item of hardware or software. The usage of the words first, second, third, etc, does not indicate any ordering. These words are to be interpreted as names.

## Claims

1. An apparatus (100) for cooking, comprising:
a presenter (103), configured to present information of a first user preparation for a first operation;
a detector (104), configured to detect if said first user preparation has been done;
a performer (105), configured to perform said first operation if said first user preparation has been done, **characterized in that**
said presenter (103) is further configured to present information of a second user preparation for a second operation;
said detector (104) is further configured to detect if said second user preparation has been done;
said performer (105) is further configured to perform said second operation if said second user preparation has been done.

2. An apparatus (100) according to claim 1, wherein said cooking comprises other operations besides said first and second operation, said presenter (103), said detector (104) and said performer (105) are further configured to do above procedures for other remaining operations until all operations for said cooking have been done.

3. An apparatus (100) according to claim 1, wherein said detector (104) is configured to:
- detect if a user feedback indicating said user preparation has been done has been received.

4. An apparatus (100) according to claim 1, further comprising:
a provider (101), configured to provide a menu for selecting before said presenter (103) presenting information of said first user preparation;
a receiver (102), configured to receive a selection in said menu.

5. An apparatus (100) according to claim 1, wherein said first operation is different from or same as said second operation.

6. An apparatus (100) according to claim 1, wherein said presenter (103) comprises at least one of the following:
a screen, configured to display text and/or videos and/or pictures for presenting information of said user preparation;
a speaker, configured to play sounds for presenting information of said user preparation.

7. A cooker, comprising an apparatus (100) as claimed according to any one of claim 1 to 6.

8. A cooker according to claim 7, wherein said cooker is a rice cooker.

9. A method of helping a user to cook, comprising:
- presenting (S203) information of a first user preparation for a first operation;
- detecting (S204) if said first user preparation has been done;
- performing (S205) said first operation if said first user preparation has been done, **characterized in that** the method further comprises:
- presenting (S206) information of a second user preparation for a second operation;
- detecting (S207) if said second user preparation has been done;
- performing (S208) said second operation if said second user preparation has been done.

10. A method according to claim 9, wherein said cooking comprises other operations besides said first and second operation, said method further comprises:
- repeating said steps of presenting, detecting, performing for other remaining operations until all operations for said cooking has been done.

11. A method according to claim 9, wherein said step of detecting if said user preparation has been done comprises:
- detecting if a user feedback indicating said user preparation has been done has been received.

12. A method according to claim 9, wherein before said step of presenting (S203) information of said first user preparation, said method further comprises:
- providing (S201) a menu for selecting;
- receiving (S202) a selection in said menu.

13. A method according to claim 9, wherein said step of presenting information of said user preparation comprises at least one of the following:
- presenting information of said user preparation in form of displaying texts on a screen;
- presenting information of said user preparation in form of displaying videos or pictures on a screen;
- presenting information of said user preparation in form of playing sounds via a speaker.

## Patentansprüche

1. Garvorrichtung (100) mit:
einem Presenter (103), der so eingerichtet ist, dass er Informationen über eine erste Benutzervorbereitung für einen ersten Arbeitsgang aufzeigt;
einem Detektor (104), der so eingerichtet ist, dass er detektiert, ob die erste Benutzervorbereitung ausgeführt wurde;
einem Performer (105), der so eingerichtet ist, dass er den ersten Arbeitsgang ausführt, wenn die erste Benutzervorbereitung abgeschlossen wurde, **dadurch gekennzeichnet, dass**
der Presenter (103) weiterhin so eingerichtet ist, dass er Informationen über eine zweite Benutzervorbereitung für einen zweiten Arbeitsgang aufzeigt;
der Detektor (104) weiterhin so eingerichtet ist, dass er detektiert, ob die zweite Benutzervorbereitung erfolgt ist;
der Performer (105) weiterhin so eingerichtet ist, dass er den zweiten Arbeitsgang ausführt, wenn die zweite Benutzervorbereitung abgeschlossen worden ist.

2. Vorrichtung (100) nach Anspruch 1, wobei das Garen neben dem ersten und zweiten Arbeitsgang weitere Arbeitsgänge umfasst, wobei der Presenter (103), der Detektor (104) und der Performer (105) weiterhin so eingerichtet sind, dass sie die obigen Vorgänge für weitere verbleibende Arbeitsgänge ausführen, bis sämtliche Arbeitsgänge für den Garvorgang abgeschlossen wurden.

3. Vorrichtung (100) nach Anspruch 1, wobei der Detektor (104) so eingerichtet ist, dass er:
detektiert, ob eine Benutzerrückmeldung empfangen wurde, die anzeigt, dass die Benutzervorbereitung abgeschlossen wurde.

4. Vorrichtung (100) nach Anspruch 1, die weiterhin umfasst:
einen Provider (101), der so eingerichtet ist, dass er ein Menü bereitstellt, um eine Auswahl zu treffen, bevor der Presenter (103) Informationen über die erste Benutzervorbereitung aufzeigt;
einen Empfänger (102), der so eingerichtet ist, dass er eine Auswahl in dem Menü empfängt.

5. Vorrichtung (100) nach Anspruch 1, wobei sich der erste Arbeitsgang von dem zweiten Arbeitsgang unterscheidet oder genauso wie dieser ist.

6. Vorrichtung (100) nach Anspruch 1, wobei der Presenter (103) zumindest umfasst:
einen Bildschirm, der so eingerichtet ist, dass er Text und/oder Videos und/oder Bilder zum Aufzeigen von Informationen über die Benutzervorbereitung darstellt; oder
einen Lautsprecher, der so eingerichtet ist, dass er Töne zur Darstellung der Informationen über die Benutzervorbereitung wiedergibt.

7. Garer mit einer Vorrichtung (100) nach einem der Ansprüche 1 bis 6.

8. Garer nach Anspruch 7, wobei es sich bei dem Garer um einen Reisgarer handelt.

9. Kochhilfeverfahren, wonach:
- Informationen über eine erste Benutzervorbereitung für einen ersten Arbeitsgang aufgezeigt werden (S203);
- detektiert wird (S204), ob die erste Benutzervorbereitung erfolgt ist;
- der erste Arbeitsgang ausgeführt wird (S205), wenn die erste Benutzervorbereitung abgeschlossen wurde, **dadurch gekennzeichnet, dass** gemäß dem Verfahren weiterhin:
- Informationen über eine zweite Benutzervorbereitung für einen zweiten Arbeitsgang aufgezeigt werden (S206);
- detektiert wird (S207), ob die zweite Benutzervorbereitung erfolgt ist;
- der zweite Arbeitsgang ausgeführt wird (S208), wenn die zweite Benutzervorbereitung abgeschlossen wurde.

10. Verfahren nach Anspruch 9, wobei der Garvorgang weitere Arbeitsgänge zwischen dem ersten und zweiten Arbeitsgang umfasst, wobei gemäß dem Verfahren weiterhin:
- die Schritte des Aufzeigens, Detektierens und Ausführens für die weiteren verbleibenden Arbeitsgänge wiederholt werden, bis sämtliche Arbeitsgänge für den Garvorgang ausgeführt wurden.

11. Verfahren nach Anspruch 9, wobei der Schritt des Detektierens, ob die Benutzervorbereitung durchgeführt wurde, umfasst:
- das Detektieren, ob eine Benutzerrückmeldung empfangen wurde, die anzeigt, dass die Benutzervorbereitung abgeschlossen wurde.

12. Verfahren nach Anspruch 9, wobei vor dem Schritt des Aufzeigens (S203) von Informationen über die erste Benutzervorbereitung weiterhin gemäß dem Verfahren:
- ein Menü zur Auswahl bereitgestellt wird (S201);
- eine Auswahl in dem Menü empfangen wird (S202).

13. Verfahren nach Anspruch 9, wobei der Schritt des Aufzeigens von Informationen über die Benutzervorbereitung zumindest einen der folgenden Schritte umfasst, wonach:
- Informationen über die Benutzervorbereitung in Form von auf einem Bildschirm dargestellten Texten aufgezeigt werden:
- Informationen über die Benutzervorbereitung in Form von auf einem Bildschirm dargestellten Videos oder Bildern aufgezeigt werden;
- Informationen über die Benutzervorbereitung in Form von über einen Lautsprecher wiedergegebenen Tönen aufgezeigt werden.

## Revendications

1. Appareil (100) de cuisson, comprenant :
un module de présentation (103), conçu pour présenter des informations sur une première préparation d'utilisateur pour une première opération ;
un module de détection (104), conçu pour détecter si ladite première préparation d'utilisateur a été réalisée ;
un module d'exécution (105), conçu pour exécuter ladite première opération si ladite première préparation d'utilisateur a été réalisée, **caractérisé en ce que**
ledit module de présentation (103) est conçu en outre pour présenter des informations sur une deuxième préparation d'utilisateur pour une deuxième opération ;
ledit module de détection (104) est conçu en outre pour détecter si ladite deuxième préparation d'utilisateur a été réalisée ;
ledit module d'exécution (105) est conçu en outre pour exécuter ladite deuxième opération si ladite deuxième préparation d'utilisateur a été réalisée.

2. Appareil (100) selon la revendication 1, dans lequel ladite cuisson comprend d'autres opérations en plus desdites première et deuxième opérations, ledit module de présentation (103), ledit module de détection (104) et ledit module d'exécution (105) étant conçus en outre pour effectuer les procédures précitées pour des opérations restantes jusqu'à ce que toutes les opérations de ladite cuisson aient été réalisées.

3. Appareil (100) selon la revendication 1, dans lequel ledit module de détection (104) est conçu pour :
détecter la réception ou non d'un retour utilisateur indiquant que ladite préparation d'utilisateur a été réalisée.

4. Appareil (100) selon la revendication 1, comprenant en outre :
un module de fourniture (101), conçu pour fournir un menu de sélection avant que ledit module de présentation (103) ne présente des informations sur ladite première préparation d'utilisateur ;
un module de réception (102), conçu pour recevoir une sélection dans ledit menu.

5. Appareil (100) selon la revendication 1, dans lequel ladite première opération est différente de ladite deuxième opération ou identique à celle-ci.

6. Appareil (100) selon la revendication 1, dans lequel ledit module de présentation (103) comprend au moins un des éléments suivants :
un écran, conçu pour afficher un texte et/ou des vidéos et/ou des photos pour présenter des informations sur ladite préparation d'utilisateur ;
un haut-parleur, conçu pour diffuser des sons destinés à présenter des informations sur ladite préparation d'utilisateur.

7. Cuiseur, comprenant un appareil (100) selon l'une quelconque des revendications 1 à 6.

8. Cuiseur selon la revendication 7, ledit cuiseur étant un cuiseur à riz.

9. Procédé pour aider un utilisateur à cuisiner, comprenant :
- la présentation (S203) d'informations sur une première préparation d'utilisateur pour une première opération ;
- la détection (S204) de la réalisation ou non de ladite première préparation d'utilisateur ;
- l'exécution (S205) de ladite première opération si ladite première préparation d'utilisateur a été réalisée, **caractérisé en ce que** le procédé comprend en outre :
- la présentation (S206) d'informations sur une deuxième préparation d'utilisateur pour une deuxième opération ;
- la détection (S207) de la réalisation ou non de ladite deuxième préparation d'utilisateur ;
- l'exécution (S208) de ladite deuxième opération si ladite deuxième préparation d'utilisateur a été réalisée.

10. Procédé selon la revendication 9, dans lequel ladite cuisson comprend d'autres opérations en plus desdites première et deuxième opérations, ledit procédé comprenant en outre :
- la répétition desdites étapes de présentation, de détection, d'exécution pour des opérations restantes jusqu'à ce que toutes les opérations de ladite cuisson aient été réalisées.

11. Procédé selon la revendication 9, dans lequel ladite étape de détection de la réalisation ou non de ladite préparation d'utilisateur comprend :
- la détection de la réception ou non d'un retour utilisateur indiquant que ladite préparation d'utilisateur a été réalisée.

12. Procédé selon la revendication 9, dans lequel avant ladite étape de présentation (S203) d'informations sur ladite première préparation d'utilisateur, ledit procédé comprend en outre :
- la fourniture (S201) d'un menu de sélection ;
- la réception (S202) d'une sélection dans ledit menu.

13. Procédé selon la revendication 9, dans lequel ladite étape de présentation d'informations sur ladite préparation d'utilisateur comprend au moins un des éléments suivants :
- la présentation d'informations sur ladite préparation d'utilisateur sous forme d'un affichage de textes sur un écran ;
- la présentation d'informations sur ladite préparation d'utilisateur sous forme d'un affichage de vidéos ou de photos sur un écran ;
- la présentation d'informations sur ladite préparation d'utilisateur sous forme d'une diffusion de sons par un haut-parleur.
